(19) Europäisches Patentamt
European Patent Office
Office européen des brevets

(11) **EP 4 683 029 A1**

(12) **EUROPEAN PATENT APPLICATION**
published in accordance with Art. 153(4) EPC

(43) Date of publication:
**21.01.2026  Bulletin 2026/04**

(21) Application number: 24770416.6

(22) Date of filing: **19.02.2024**

(51) International Patent Classification (IPC):
*H01M 10/0585* (2010.01)      *H01M 4/13* (2010.01)
*H01M 4/62* (2006.01)      *H01M 10/052* (2010.01)
*H01M 10/0562* (2010.01)

(52) Cooperative Patent Classification (CPC):
H01M 4/13; H01M 4/62; H01M 10/052;
H01M 10/0562; H01M 10/0585

(86) International application number:
**PCT/JP2024/005807**

(87) International publication number:
**WO 2024/190302 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023  JP 2023040905**

(71) Applicant: **Panasonic Intellectual Property
Management Co., Ltd.
Kadoma-shi, Osaka 571-0057 (JP)**

(72) Inventors:
• **YAGISHITA, Tomohiro
  Kadoma-shi, Osaka 571-0057 (JP)**
• **HOTEHAMA, Kenichi
  Kadoma-shi, Osaka 571-0057 (JP)**

(74) Representative: **Novagraaf International SA
Chemin de l'Echo 3
1213 Onex, Geneva (CH)**

(54) **BATTERY AND METHOD FOR PRODUCING SAME**

(57)     A battery according to the present disclosure includes: a first electrode; a second electrode; and an electrolyte layer disposed between the first electrode and the second electrode so as to be in contact with the first electrode and the second electrode, wherein the first electrode is a sintered body including a first active material and a first oxide solid electrolyte, the electrolyte layer is a sintered body including a second oxide solid electrolyte, and includes: a first region including an interface between the first electrode and the electrolyte layer; and a central region including a center position in a thickness direction, the electrolyte layer having an insulating property in the first region, and a mass ratio of a carbide derived from a binder in the first electrode is lower than a mass ratio of a carbide derived from a binder in the central region of the electrolyte layer.

FIG.1

EP 4 683 029 A1

**Description**

TECHNICAL FIELD

The present disclosure relates to a battery and a method for producing the same.

BACKGROUND ART

Research and development of solid-state batteries as next-generation batteries is being actively conducted.

As described in Patent Literature 1, a solid-state battery is produced, for example, by stacking and firing a plurality of green sheets. The plurality of green sheets includes a positive electrode green sheet, a solid electrolyte green sheet, and a negative electrode green sheet.

CITATION LIST

Patent Literature

Patent Literature 1: JP 5803700 B

SUMMARY OF INVENTION

Technical Problem

In conventional techniques, there is a demand for improving the fracture resistance of a battery.

Solution to Problem

The present disclosure provides a battery including:

a first electrode;
a second electrode; and
an electrolyte layer disposed between the first electrode and the second electrode so as to be in contact with the first electrode and the second electrode, wherein
the first electrode is a sintered body including a first active material and a first oxide solid electrolyte,
the electrolyte layer is a sintered body including a second oxide solid electrolyte, and includes: a first region including an interface between the first electrode and the electrolyte layer; and a central region including a center position in a thickness direction, the electrolyte layer having an insulating property in the first region, and
the battery satisfies at least one selected from the following requirements (a) and (b):

(a) a mass ratio of a carbide derived from a binder in the first electrode is lower than a mass ratio of a carbide derived from a binder in the central region of the electrolyte layer; and
(b) when a ratio of the number of grain boundaries including a carbide to the number of grain boundaries appearing in a cross section of the battery parallel to the thickness direction is defined as an index A, the index A of the first electrode is lower than the index A of the central region of the electrolyte layer.

Advantageous Effects of Invention

According to the technique of the present disclosure, it is possible to improve the fracture resistance of the battery.

BRIEF DESCRIPTION OF DRAWINGS

FIG. 1 is a cross-sectional view schematically showing the configuration of a battery according to an embodiment of the present disclosure.
FIG. 2 is a process diagram showing a method for producing a battery.

DESCRIPTION OF EMBODIMENTS

(Findings Underlying the Present Disclosure)

Solid-state batteries exhibit superior heat resistance compared to batteries using liquid electrolytes. Solid-state batteries are expected to generate new demand. For example, it is conceivable to mount a solid-state battery on an electronic circuit board to use the solid-state battery in high-temperature environments. However, a significant difference in the coefficient of linear expansion is anticipated to exist between the solid-state battery and the electronic circuit board. Consequently, stress caused by the difference in the coefficient of linear expansion is applied to the solid-state battery, potentially causing damage to the solid-state battery.

Furthermore, the following production method is suitable for mass production of solid-state batteries. By cutting a large-area green sheet stack, individual green sheet stacks each corresponding in size to one solid-state battery are obtained. The individual stack is then fired to obtain the solid-state battery. Since burrs resulting from the cutting may remain on the solid-state battery, polishing is required to remove the burrs after the firing. During this polishing, impact is applied to the solid-state battery, potentially causing damage to the solid-state battery.

The present inventors have focused on the amount of a carbide derived from a binder in each layer. That is, the present inventors have come to conceive the technique of the present disclosure based on the finding that adjusting the amount of a carbide derived from a binder can improve the fracture resistance of a battery.

Embodiments of the present disclosure are described below with reference to the drawings. The present disclosure is not limited to the embodiments below.

(Embodiments)

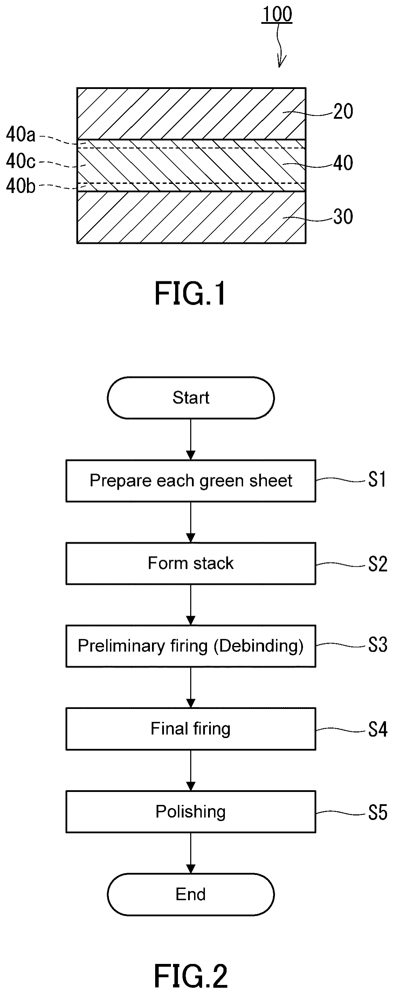

FIG. 1 is a cross-sectional view schematically showing the configuration of a battery 100 according to an embodiment of the present disclosure.

The battery 100 includes a positive electrode 20, a negative electrode 30, and an electrolyte layer 40. The electrolyte layer 40 is disposed between the positive electrode 20 and the negative electrode 30 so as to be in contact with the positive electrode 20 and the negative electrode 30. The battery 100 may include a plurality of layers of the positive electrode 20, a plurality of layers of the negative electrode 30, and a plurality of layers of the electrolyte layer 40. In that case, the battery 100 may include an internal current collector.

In the present embodiment, the positive electrode 20 corresponds to the first electrode and the negative electrode 30 corresponds to the second electrode. However, a configuration may be employed in which the positive electrode 20 corresponds to the second electrode and the negative electrode 30 corresponds to the first electrode.

In the present description, "sintering" refers to a phenomenon in which, when a compact of a powder material is heated, bonding occurs between particles, and the compact becomes densified along with volume shrinkage. "Firing" refers to heat treatment for sintering.

The positive electrode 20 is a sintered body including a positive electrode active material and an oxide solid electrolyte.

The positive electrode active material is a material having the capability to occlude and release metal ions such as lithium ions. Examples of the positive electrode active material include a lithium-containing transition metal oxide and a lithium-containing transition metal phosphate. Among these, a lithium-containing transition metal phosphate is suitable for the positive electrode 20. Examples of lithium-containing transition metal phosphates include lithium iron phosphate, lithium vanadium phosphate, lithium cobalt phosphate, and lithium nickel phosphate.

In the positive electrode 20, the oxide solid electrolyte is not particularly limited. Examples of the oxide solid electrolyte include a solid electrolyte having a NASICON-type structure, a solid electrolyte having a perovskite-type structure, a solid electrolyte having a LISICON-type structure, and a solid electrolyte having a garnet-type structure. Among these, a lithium-containing phosphoric acid compound having a NASICON-type structure is suitable for the positive electrode 20.

NASICON-type solid electrolytes are materials that are capable of being sintered at low temperatures, compared to other oxide solid electrolytes such as solid electrolytes having a perovskite-type structure and solid electrolytes having a garnet-type structure. The capability of being sintered at low temperatures indicates an advantage in suppressing reactions between the active material and the solid electrolyte.

The lithium-containing phosphoric acid compound may have a composition of $Li_{1+x}Al_xGe_{2-x}(PO_4)_3$ ($0 \leq x \leq 2$). In the present description, a compound having the above composition may be referred to as "LAGP." Another example of the lithium-containing phosphoric acid compound is $Li_{1+x}Al_xTi_{2-x}(PO_4)_3$ ($0 \leq x \leq 2$). In the present description, this compound may be referred to as "LATP."

The electrolyte layer 40 is a sintered body including an oxide solid electrolyte and a carbide derived from a binder.

In the electrolyte layer 40, the oxide solid electrolyte is not particularly limited. The oxide solid electrolytes described above for the positive electrode 20 can also be used in the electrolyte layer 40. For the same reason as the positive electrode 20, a lithium-containing phosphoric acid compound having a NASICON-type structure is suitable for the electrolyte layer 40.

The electrolyte layer 40 has a first region 40a, a second region 40b, and a central region 40c. The first region 40a is a region that includes the interface between the positive electrode 20 and the electrolyte layer 40. The second region 40b is a region that includes the interface between the negative electrode 30 and the electrolyte layer 40. The central region 40c is a region that includes the center position of the electrolyte layer 40 in the thickness direction. In the present embodiment, the central region 40c is the region excluding the first region 40a and the second region 40b.

The electrolyte layer 40 has an insulating property in the first region 40a. The central region 40c contains the carbide derived from the binder. The binder is contained in a green sheet corresponding to the electrolyte layer 40 before firing. By adjusting the type of binder contained in the green sheet and the debinding temperature during firing, it is possible to intentionally retain the carbide derived from the binder in the central region 40c. Although the carbide as a residue of the binder may remain as an unavoidable impurity in the first region 40a, its amount is not sufficient to impair the insulating property of the first region 40a.

Similarly, the electrolyte layer 40 has an insulating property in the second region 40b. The central region 40c contains the carbide derived from the binder. The binder is contained in a green sheet corresponding to the electrolyte layer 40 before firing. By adjusting the type of binder contained in the green sheet and the debinding temperature during firing, it is possible to intentionally retain the carbide derived from the binder in the central region 40c. Although the carbide as a residue of the binder may remain as an unavoidable impurity in the second region 40b, its amount is not sufficient to impair the insulating property of the second region 40b.

The negative electrode 30 is a sintered body including a negative electrode active material and an oxide solid electrolyte.

The negative electrode active material is a material having the capability to occlude and release metal ions such as lithium ions. Examples of the negative electrode active material include titanium(IV) oxide, a composite oxide containing titanium and niobium, and a lithium-containing transition metal phosphate. Examples of titanium(IV) oxide include anatase-type (tetragonal) titanium oxide, rutile-type (tetragonal) titanium oxide, and brookite-type (orthorhombic) titanium oxide. The composite oxide containing titanium and niobium has a composition of, for example, $TiNb_2O_7$. Examples of lithium-containing transition metal phosphates include lithium vanadium phosphate.

In the negative electrode 30, the oxide solid electrolyte is not particularly limited. The oxide solid electrolytes described above for the positive electrode 20 can also be used in the negative electrode 30. For the same reason as the positive electrode 20, a lithium-containing phosphoric acid compound having a NASICON-type structure is suitable for the negative electrode 30.

The negative electrode 30 may include other materials such as a conductive additive. Examples of the conductive additive include the materials described above.

The composition of the oxide solid electrolyte contained in the negative electrode 30 may be the same as or different from the composition of the oxide solid electrolyte contained in the positive electrode 20. The composition of the oxide solid electrolyte contained in the electrolyte layer 40 may be the same as or different from the composition of the oxide solid electrolyte contained in the positive electrode 20. The positive electrode 20, the electrolyte layer 40, and the negative electrode 30 may contain an oxide solid electrolyte of the same composition. The composition of the oxide solid electrolyte contained in the positive electrode 20, the composition of the oxide solid electrolyte contained in the electrolyte layer 40, and the composition of the oxide solid electrolyte contained in the negative electrode 30 may be different from each other.

The battery 100 of the present embodiment satisfies at least one selected from the following requirements (a1) and (b1). Requirement (a1): A mass ratio M1 of a carbide derived from a binder in the positive electrode 20 is lower than a mass ratio M2 of the carbide derived from the binder in the central region 40c of the electrolyte layer 40. Requirement (b1): When the ratio of the number of grain boundaries containing a carbide to the number of grain boundaries appearing in a cross section of the battery 100 parallel to the thickness direction is defined as an index A, the index A of the positive electrode 20 is lower than the index A of the central region 40c of the electrolyte layer 40. However, the electrolyte layer 40 has the insulating property in the first region 40a. In other words, the electrolyte layer 40 has no electronic conductivity in this region. Accordingly, the positive electrode 20 and the negative electrode 30 are electrically isolated from each other, suppressing self-discharge of the battery 100.

The properties of the electrolyte layer 40 have a significant effect on the fracture resistance of the battery 100. This is because the electrolyte layer 40 has a lower porosity than the positive electrode 20 and the negative electrode 30, and serves as a support. The carbide derived from the binder remains in the central region 40c of the electrolyte layer 40. The carbide derived from the binder is present at the grain boundaries of particles of the oxide solid electrolyte. When an impact is applied to the electrolyte layer 40, the carbide absorbs the impact. When bending stress is applied to the electrolyte layer 40, deformation of the electrolyte layer 40 is promoted by the sliding of the grain boundaries at which the carbide is present. Consequently, the fracture resistance of the battery 100 is improved.

In the case where the battery 100 satisfies at least one selected from the above requirements (a1) and (b1), the fracture resistance of the battery 100 can be further improved. The reasons are as follows. The sintered body as the positive electrode 20 is formed of a composite material of an active material and an oxide solid electrolyte. The positive electrode 20 optionally contains a conductive additive. In contrast, the sintered body as the electrolyte layer 40 is formed of an oxide solid electrolyte, except for the carbide derived from the binder. Accordingly, the porosity of the electrolyte layer 40 is lower than the porosity of the positive electrode 20. As in the present embodiment, the carbide remaining in the electrolyte layer 40 having low porosity can improve the fracture resistance of the battery 100. Although the origin of fracture in the battery 100 is located at a void, the lower the porosity, that is, the higher the degree of densification, the more easily the action of the sliding of the grain boundaries at which the carbide is present can be exhibited. In contrast, the higher the porosity, that is, the lower the degree of densification, the less easily the action of the sliding of the grain boundaries at which the carbide is present can be exhibited. The porosity of the electrolyte layer 40, the porosity of the positive electrode 20, and the porosity of the negative electrode 30 can be calculated by the following method. A cross section of the battery 100 parallel to the thickness direction is observed using a scanning electron microscope to obtain an SEM image of the cross section. The total number of pixels and the number of pixels corresponding to voids are measured in the SEM image by image processing. The ratio of the number of pixels corresponding to the voids to the total number of pixels is the porosity.

The positive electrode 20 may or may not unavoidably contain the carbide derived from the binder. The binder is contained in a green sheet corresponding to the positive electrode 20 before firing. Although most of the binder is decomposed and removed during firing, the carbide as a residue of the binder may remain as an unavoidable impurity in the positive electrode 20.

To ensure the insulating property required for the electrolyte layer 40, the first region 40a has a thickness of, for example, 1 $\mu$m or more. The upper limit of the thickness of the first region 40a is not particularly limited and is, for example, 10 $\mu$m.

The battery 100 of the present embodiment may satisfy at least one selected from the following requirements (a2) and (b2). Requirement (a2): A mass ratio M3 of a carbide derived from a binder in the negative electrode 30 is lower than the mass ratio M2 of the carbide derived from the binder in the central region 40c of the electrolyte layer 40. Requirement (b2): When the ratio of the number of grain boundaries containing the carbide to the number of grain boundaries appearing in a cross section of the battery 100 parallel to the thickness direction is defined as an index A, the index A of the negative electrode 30 is lower than the index A of the central region 40c of the electrolyte layer 40. According to this configuration, the fracture resistance of the battery 100 is further improved for the same reason as the positive electrode 20.

The electrolyte layer 40 has the insulating property in the second region 40b. In other words, the electrolyte layer 40 has no electronic conductivity in this region. Accordingly, the positive electrode 20 and the negative electrode 30 are electrically isolated from each other more reliably, suppressing self-discharge of the battery 100.

The negative electrode 30 may or may not unavoidably contain the carbide derived from the binder. The binder is contained in a green sheet corresponding to the negative electrode 30 before firing. Although most of the binder is decomposed and removed during firing, the carbide as a residue of the binder may remain as an unavoidable impurity in the negative electrode 30.

To ensure the insulating property of the electrolyte layer 40, the second region 40b has a thickness of, for example, 1 $\mu$m or more. The upper limit of the thickness of the second region 40b is not particularly limited and is, for example, 10 $\mu$m.

The central region 40c of the electrolyte layer 40 can be the region excluding the first region 40a having a thickness of 1 $\mu$m to 10 $\mu$m and the second region 40b having a thickness of 1 $\mu$m to 10 $\mu$m.

A mass ratio M2a of the carbide derived from the binder in the first region 40a of the electrolyte layer 40 is lower than the mass ratio M2 of the carbide derived from the binder in the central region 40c of the electrolyte layer 40. According to this configuration, the electrolyte layer 40 can easily ensure the insulating property in the first region 40a. The mass ratio M2a of the carbide derived from the binder in the first region 40a of the electrolyte layer 40 may be equal to the mass ratio M1 of the carbide derived from the binder in the positive electrode 20.

A mass ratio M2b of the carbide derived from the binder in the second region 40b of the electrolyte layer 40 is lower than the mass ratio M2 of the carbide derived from the binder in the central region 40c of the electrolyte layer 40. According to this configuration, the electrolyte layer 40 can easily ensure the insulating property in the second region 40b. The mass ratio M2b of the carbide derived from the binder in the second region 40b of the electrolyte layer 40 may be equal to the mass ratio M3 of the carbide derived from the binder in the negative electrode 30.

The presence or absence of the carbide derived from the binder can be confirmed by observing the grain boundaries between particles of the sintered solid electrolyte and the grain boundaries between particles of the sintered solid electrolyte and particles of the active material. The carbide derived from the binder is present at the grain boundaries with a thickness of several nm to several 10 nm.

The fact that the first region 40a of the electrolyte layer 40 has the insulating property can be confirmed by observing a cross section of the battery 100 using scanning spreading resistance microscopy (SSRM). Specifically, the cross section of the electrolyte layer 40 corresponding to the first region 40a is observed using a scanning spreading resistance microscope. Based on the current value at each pixel within the observation field of view, a histogram is created with the horizontal axis representing current values and the vertical axis representing the number of pixels. In the case where a peak is observed only in the vicinity of 0 mA, it can be determined that the electrolyte layer 40 has no electronic conductivity and has an insulating property in the first region 40a corresponding to the above observation field of view. The same method can also be applied to the second region 40b and the central region 40c.

Next, a method for producing the battery 100 is described. FIG. 3 is a process diagram showing the method for producing the battery 100.

In Step S1, a positive electrode green sheet, an electrolyte layer green sheet, and a negative electrode green sheet are prepared.

The positive electrode green sheet is obtained by applying a positive electrode slurry to a substrate to form a coating film and then drying the coating film. The positive electrode slurry contains, for example, a positive electrode active material, an oxide solid electrolyte, a conductive additive, a first binder, and a solvent.

The electrolyte layer green sheet is obtained by applying an electrolyte slurry to a substrate to form a coating film and then drying the coating film. The electrolyte slurry contains, for example, an oxide solid electrolyte, a second binder, and a solvent.

The negative electrode green sheet is obtained by applying a negative electrode slurry to a substrate to form a coating film and then drying the coating film. The negative electrode slurry contains, for example, a negative electrode active material, an oxide solid electrolyte, a conductive additive, a first binder, and a solvent. Using a common binder in the positive electrode slurry and the negative electrode slurry is advantageous in terms of material cost and also facilitates temperature control during the firing process.

As the first binder and the second binder, thermoplastic resins such as polyvinyl butyral (PVB), polyvinylidene fluoride (PVdF), cellulose, acrylic, urethane, and polyvinyl alcohol (PVA) can be used. The solvent is typically an organic solvent such as an absolute alcohol (e.g., absolute ethanol), toluene, butyl acetate, and NMP. In addition, each slurry may contain a plasticizer. The type of plasticizer is not particularly limited, and phthalic acid esters such as dioctyl phthalate and diisononyl phthalate and the like can be used.

In the present embodiment, the decomposition temperature of the second binder contained in the electrolyte slurry is higher than the decomposition temperature of the first binder contained in the positive electrode slurry and the negative electrode slurry. In the case where the first binder and the second binder are selected to satisfy this relationship, temperature adjustment during firing makes it possible to intentionally retain the carbide derived from the binder in the electrolyte layer 40, while sufficiently removing the binder from the positive electrode 20 and the negative electrode 30.

In one example, a combination in which polyvinyl butyral is used as the second binder and acrylic resin is used as the first binder can be employed. The decomposition temperature of polyvinyl butyral is 450°C to 500°C. The decomposition temperature of an acrylic resin having a high molecular weight is 350°C to 400°C. The decomposition temperature of an acrylic resin having a low molecular weight is 300°C to 450°C. The decomposition temperature of a binder is the temperature at which weight loss is complete when thermogravimetry (TG) is performed in air.

The difference between the decomposition temperature of the first binder and the decomposition temperature of the second binder is, for example, 100°C or more, and may be 150°C or more. This configuration facilitates temperature control during firing. The upper limit of the difference in decomposition temperature is not particularly limited and is, for example, 200°C.

In Step S2, the positive electrode green sheet, the electrolyte layer green sheet, and the negative electrode green sheet are stacked to form a stack. The stack is an assembly of a plurality of unfired bodies. By cutting the stack, individual stacks each corresponding in size to one battery 100 are obtained.

In the case where a plurality of the positive electrode green sheets, a plurality of the electrolyte layer green sheets, and a plurality of the negative electrode green sheets are alternately stacked to form an MLCC (multi-layer ceramic capacitor) type stack, the stack may include an internal current collector. The internal current collector can be formed by applying a paste containing a metal such as Ni or Ag to the positive electrode green sheet and/or the negative electrode green sheet.

In Step S3, the stack is subjected to preliminary firing. The preliminary firing is a process for decomposing and removing the binder contained in the stack. In the preliminary firing, the stack is heated at a predetermined debinding temperature to remove the first binder from the stack. The predetermined debinding temperature is a temperature between the decomposition temperature of the first binder and the decomposition temperature of the second binder. When the stack is fired at such a temperature, the first binder is decomposed and removed from the stack. Consequently, numerous voids are formed in the positive electrode green sheet and the negative electrode green sheet. On the other hand, the second binder is not decomposed but remains in the electrolyte green sheet. However, in the vicinity of the interface between the positive electrode green sheet and the electrolyte green sheet, the second binder contained in the electrolyte green sheet is expelled into the voids in the positive electrode green sheet and thereby removed. Similarly, in the vicinity of the interface between the negative electrode green sheet and the electrolyte green sheet, the second binder contained in the electrolyte green sheet is expelled into the voids in the negative electrode green sheet and thereby removed. Consequently, it is possible to retain the second binder only in the central region of the electrolyte green sheet.

The debinding temperature in the preliminary firing depends on the decomposition temperatures of the first binder and the second binder. It is desirable that the debinding temperature in the preliminary firing be higher than the decomposition temperature of the first binder and lower than the decomposition temperature of the second binder. In one example, the debinding temperature (ambient temperature) in the preliminary firing is in the range of 250°C to 550°C. The time of the preliminary firing is, for example, 1 hour to 60 hours. The preliminary firing is performed, for example, in air or in an inert atmosphere. The inert atmosphere is, for example, a nitrogen gas atmosphere or a noble gas atmosphere.

In Step S4, the stack is subjected to final firing. In the final firing, the stack is heated at a higher temperature than the above-described debinding temperature. In one example, the firing temperature (ambient temperature) in the final firing is in the range of 600°C to 800°C. The time of the final firing is, for example, 1 hour to 60 hours. The final firing is performed, for example, in an inert atmosphere. The inert atmosphere is, for example, a nitrogen gas atmosphere or a noble gas atmosphere. In the case where the final firing is performed in the above atmospheres, when a residue of the binder is present in any layer, the residue of the binder can be carbonized to retain the resulting carbide in that layer.

In Step S5, the resulting sintered body is polished to remove burrs. The polishing method is not particularly limited and is, for example, barrel polishing.

Through the above process, the battery 100 of the present embodiment is obtained. According to the above production method, it is possible to selectively retain the carbide derived from the binder in the central region c of the electrolyte layer 40, so that the mass ratio M1 of the carbide derived from the binder in the positive electrode 20 is lower than the mass ratio M2 of the carbide derived from the binder in the central region 40c of the electrolyte layer 40. Similarly, the mass ratio M3 of the carbide derived from the binder in the negative electrode 30 is lower than the mass ratio M2 of the carbide derived from the binder in the central region 40c of the electrolyte layer 40.

(Other Embodiments)

(Supplementary Note)

The above description of the embodiments discloses the following techniques.

(Technique 1)

A battery including:

a first electrode;
a second electrode; and
an electrolyte layer disposed between the first electrode and the second electrode so as to be in contact with the first electrode and the second electrode, wherein
the first electrode is a sintered body including a first active material and a first oxide solid electrolyte,
the electrolyte layer is a sintered body including a second oxide solid electrolyte, and includes: a first region including an interface between the first electrode and the electrolyte layer; and a central region including a center position in a thickness direction, the electrolyte layer having an insulating property in the first region, and
the battery satisfies at least one selected from the following requirements (a) and (b):

(a) a mass ratio of a carbide derived from a binder in the first electrode is lower than a mass ratio of a carbide derived from a binder in the central region of the electrolyte layer; and
(b) when a ratio of the number of grain boundaries including a carbide to the number of grain boundaries appearing in a cross section of the battery parallel to the thickness direction is defined as an index A, the index A of the first electrode is lower than the index A of the central region of the electrolyte layer.

According to this configuration, the fracture resistance of the battery can be improved.

(Technique 2)

The battery according to Technique 1, wherein the first oxide solid electrolyte and the second oxide solid electrolyte each include a lithium-containing phosphoric acid compound having a NASICON-type structure. Such a material is capable of being sintered at low temperatures, and is therefore suitable for the battery of the present disclosure.

(Technique 3)

The battery according to Technique 1 or 2, wherein the second electrode is a sintered body including a second active material and a third oxide solid electrolyte, and a mass ratio of a carbide derived from a binder in the second electrode is lower than the mass ratio of the carbide derived from the binder in the central region of the electrolyte layer. According to this configuration, the fracture resistance of the battery is further improved for the same reason as the first electrode.

(Technique 4)

The battery according to Technique 3, wherein the electrolyte layer further includes a second region including an interface between the second electrode and the electrolyte layer, the electrolyte layer having an insulating property in the second region. According to this configuration, the first electrode and the second electrode are electrically isolated from each other more reliably, suppressing self-discharge of the battery.

(Technique 5)

The battery according to Technique 3 or 4, wherein the third oxide solid electrolyte includes a lithium-containing phosphoric acid compound having a NASICON-type structure. For the same reason as the first electrode, a lithium-containing phosphoric acid compound having a NASICON-type structure is suitable for the second electrode.

(Technique 6)

The battery according to any one of Techniques 1 to 5, wherein a porosity of the electrolyte layer is lower than a porosity of the first electrode. According to this configuration, the electrolyte layer can serve as a support.

(Technique 7)

A method for producing a battery including a first electrode, an electrolyte layer, and a second electrode in this order, the method including

firing a stack including: a first electrode sheet including a first active material, a first solid electrolyte, and a first binder; and an electrolyte sheet including a second solid electrolyte and a second binder, wherein
a decomposition temperature of the second binder is higher than a decomposition temperature of the first binder.

According to this configuration, temperature adjustment during firing makes it possible to intentionally retain a carbide derived from the binder in the electrolyte layer, while sufficiently removing the binder from the first electrode and the second electrode.

(Technique 8)

The method according to Technique 7, wherein the firing the stack includes, in the following order: heating the stack at a predetermined debinding temperature; and heating the stack at a higher temperature than the debinding temperature, and the predetermined debinding temperature is a temperature between the decomposition temperature of the first binder and the decomposition temperature of the second binder. According to this configuration, it is possible to retain the second binder only in the central region of the electrolyte green sheet.

(Technique 9)

The method according to Technique 7 or 8, wherein a difference between the decomposition temperature of the first binder and the decomposition temperature of the second binder is 100°C or more. This configuration facilitates temperature control during firing.

Examples

[Example 1]

(Preparation of Electrode Green Sheet)

An amount of 40 parts by mass of lithium vanadium phosphate ($Li_3V_2(PO_4)_3$), 55 parts by mass of LAGP (amorphous), and 5 parts by mass of acetylene black (Li-400, manufactured by Denka Company Limited) were mixed to prepare a composite powder. The mixing of the raw materials was performed using a rocking mill (RM-05, manufactured by SEIWA GIKEN Co., Ltd.). The composite powder and a binder solution were mixed to prepare a slurry. The preparation of the slurry was performed using a planetary centrifugal mixer (THINKY MIXER, manufactured by THINKY CORPORATION). The binder solution was prepared by mixing N-methylpyrrolidone and 15 parts by mass of a high-molecular-weight acrylic (KC-7000F, manufactured by Kyoeisha Chemical Co., Ltd.). The decomposition temperature of the high-molecular-weight acrylic was approximately 350°C in air. The slurry was applied onto a release-treated PET film by doctor blading to form a coating film. The thickness of the coating film was 200 $\mu$m. The coating film was subjected to primary drying in air at 45°C, and then the coating film was subjected to secondary drying in air at 140°C. Thus, an electrode green sheet was obtained.

(Preparation of Electrolyte Green Sheet)

LAGP (amorphous) and a binder solution were mixed to prepare a slurry. The preparation of the slurry was performed using a planetary centrifugal mixer (THINKY MIXER, manufactured by THINKY CORPORATION). The binder solution was prepared by mixing N-methylpyrrolidone and 15 parts by mass of polyvinyl butyral (BM-1, manufactured by SEKISUI CHEMICAL CO., LTD.). The decomposition temperature of the polyvinyl butyral was approximately 500°C in air. The slurry was applied onto a release-treated PET film by doctor blading to form a coating film. The thickness of the coating film was 100 $\mu$m. The coating film was subjected to primary drying in air at 45°C, and then the coating film was subjected to secondary drying in air at 140°C. Thus, an electrolyte green sheet was obtained.

(Fabrication of Stack)

A single electrode green sheet, a single electrolyte green sheet, and two electrode green sheets were stacked in this order to fabricate a stack. The stack was sandwiched between 10 mm thick SKD steel plates heated to 150°C, and a pressure of 100 MPa was applied to the stack for 5 minutes using a hydraulic press (CDM-5PA, manufactured by RIKEN KIKI CO., LTD.).

(Fabrication of Stack for Discharge Testing)

The stack was punched out using a $\varphi$12 mm punch to fabricate a disk-shaped stack for discharge testing.

(Fabrication of Stack for Bending Testing and Stack for Drop Testing)

The stack was cut into pieces measuring 6 mm in width and 60 mm in length to fabricate a stack for bending testing and a stack for drop testing that were plate-shaped.

(Preliminary Firing: Debinding)

The stack fabricated to a predetermined shape was subjected to preliminary firing in air at 450°C for 2 hours.

(Final Firing)

After the preliminary firing, the stack was subjected to final firing in a nitrogen atmosphere at 650°C for 2 hours. Thus, a sintered body as a battery for evaluation was obtained.

(Attachment of Current Collector to Sintered Body)

Au thin films having a thickness of 300 nm were formed on both sides of the sintered body by sputtering.

[Example 2]

A battery (sintered body) of Example 2 was fabricated in the same manner as in Example 1, except that the binder for the electrode green sheet was changed to a low-molecular-weight acrylic (KC-1700P, manufactured by Kyoeisha Chemical Co., Ltd.). The decomposition temperature of the low-molecular-weight acrylic was approximately 300°C in air.

[Comparative Example 1]

A battery (sintered body) of Comparative Example 1 was fabricated in the same manner as in Example 2, except that the binder for the electrode green sheet was changed to polyvinyl butyral (BM-1, manufactured by SEKISUI CHEMICAL CO., LTD.) and the temperature of the preliminary firing was changed to 500°C.

[Comparative Example 2]

A battery (sintered body) of Comparative Example 2 was fabricated in the same manner as in Comparative Example 1, except that the temperature of the preliminary firing was changed to 450°C.

[Evaluation of Amount of Carbide Derived from Binder]

The sintered body was cut in the thickness direction, and cross sections of the electrode and the electrolyte layer were observed using a transmission electron microscope (TEM). Grain boundaries were identified from the TEM images, and the number of grain boundaries containing a carbide was measured from carbon mapping images obtained by energy dispersive X-ray analysis (EDX). Based on Equation (1) below, the index A was calculated for each of the electrode and the electrolyte layer as a comparative index of the amount of the carbide derived from the binder. The index A of the electrode was compared with the index A of the central region of the electrolyte layer to evaluate the magnitude relation in the amount of the carbide derived from the binder. For each of the electrode and the central region of the electrolyte layer, 100 to 120 grain boundaries were observed. "The number of all the grain boundaries observed" in Equation (1) below refers to the number of grain boundaries observed in each of the electrode and the central region of the electrolyte layer. "The number of grain boundaries containing a carbide" in Equation (1) below refers to the number of grain boundaries in which carbon was detected among the grain boundaries observed in each of the electrode and the central region of the electrolyte layer. The index A of the electrode and the index A of the central region of the electrolyte layer were then compared and shown in Table 1. In the case where the difference between the index A of the electrode and the index A of the central region of the electrolyte layer was 0.10 or less, the amounts of the carbide contained in the electrode and the central region of the electrolyte layer were regarded as substantially equal to each other. This case was indicated as "Electrode = Electrolyte layer" in Table 1. In the case where the difference between the index A of the electrode and the index A of the central region of the electrolyte layer was greater than 0.10, the magnitude relation was indicated in Table 1.

Index A = the number of grain boundaries containing a carbide/the number of all          (1)

In general, a "grain boundary" means the interface between crystal grains that have different crystal orientations. The crystalline state at a grain boundary of a sintered body is irregular. Accordingly, TEM observation of the sintered body shows that there is a portion exhibiting different contrast between particles that appear to be fused together at first glance. Such a portion can be determined as a grain boundary. The method of observing grain boundaries is not limited to methods using a TEM. Grain boundaries can also be observed by other methods such as electron backscatter diffraction (EBSD).

[Measurement of Flexural Strength]

The flexural strength of the sintered body was measured by the three-point bending method specified in JIS R 1601. The results are shown in Table 1.

[Measurement of Crack Occurrence Rate]

A plastic pipe having a diameter of $\varphi$30 mm and a length of 500 mm was vertically placed on a stainless steel plate having a thickness of 10 mm. The sintered body was repeatedly dropped through the pipe. At this time, the test was conducted such that the short side of the same sintered body would strike the stainless steel plate. After the test was repeated 10 times, a visual inspection was conducted for the presence or absence of cracks. This test was conducted on 100 samples, and the crack occurrence rate was calculated. The results are shown in Table 1.

[Measurement of Electronic Conductivity of Electrolyte Layer]

The electronic conductivity of the electrolyte layer was measured using an electrode formed from a single green sheet as the positive electrode and an electrode formed from two green sheets as the negative electrode. The sintered body of each example and comparative example was cut in the thickness direction, and a cross section of the electrolyte layer was observed using a scanning spreading resistance microscope (Dimension Icon, manufactured by Bruker Nano Inc., Nano Surfaces Division). The presence or absence of electronic conductivity was examined for the first region on the positive electrode side, the central region, and the second region on the negative electrode side. Specifically, based on the current value at each pixel within the observation field of view, a histogram was created with the horizontal axis representing current values and the vertical axis representing frequency. In the case where a peak was observed not only in the vicinity of 0 mA but also at a current value greater than 0 mA, it was determined that electronic conductivity was present. In the case where a peak was observed only in the vicinity of 0 mA, it was determined that electronic conductivity was absent. The results are shown in Table 1. The first region on the positive electrode side is a region of the electrolyte layer, and the region has a thickness of 1 μm or more and includes the interface between the positive electrode and the electrolyte layer. The second region on the negative electrode side is a region of the electrolyte layer, and the region has a thickness of 1 μm or more and includes the interface between the negative electrode and the electrolyte layer.

[Measurement of Discharge Capacity]

A charge and discharge test was conducted on the battery that was a sintered body, using an electrode formed from a single green sheet as the positive electrode and an electrode formed from two green sheets as the negative electrode. Charge was conducted under the conditions of 60°C, a current value of 7 μA, and a cutoff voltage of 3.5 V. Subsequently, discharge was conducted under the conditions of 60°C, 7 μA, and a cutoff voltage of 0 V, and the discharge capacity was measured. The discharge capacity was measured for 10 batteries and the average value thereof was calculated. The results are shown in Table 1.

[Table 1]

| | | Comparative Example 1 | Comparative Example 2 | Example 1 | Example 2 |
|---|---|---|---|---|---|
| Binder of positive electrode | | PVB | PVB | Acrylic (high molecular weight) | Acrylic (low molecular weight) |
| Binder of electrolyte layer | | PVB | PVB | PVB | PVB |
| Binder of negative electrode | | PVB | PVB | Acrylic (high molecular weight) | Acrylic (low molecular weight) |
| Conditions for preliminary firing (debinding) | Atmosphere | Air | Air | Air | Air |
| | Temperature (°C) | 500 | 450 | 450 | 450 |
| | Holding time | 2 hours | 2 hours | 2 hours | 2 hours |
| Electronic conductivity of electrolyte layer | First region (positive electrode side) | Absent | Present | Absent | Absent |
| | Central region | Absent | Present | Present | Present |
| | Second region (negative electrode side) | Absent | Present | Absent | Absent |
| Index A representing quantitative relationship of carbide derived from binder | | Electrode = Electrolyte layer | Electrode = Electrolyte layer | Electrode < Electrolyte layer | Electrode < Electrolyte layer |
| Flexural strength (MPa) | | 350 | 390 | 430 | 440 |
| Crack occurrence rate (%) | | 5 | 2 | 0 | 0 |
| Discharge capacity (mAh) | | 0.70 | 0.50 | 0.70 | 0.70 |

As shown in Table 1, the batteries of Example 1 and Example 2 had electronic conductivity in the central region of the electrolyte layer, and had no electronic conductivity in the first region and the second region of the electrolyte layer. The flexural strength of the batteries of Example 1 and Example 2 was higher than the flexural strength of the batteries of Comparative Example 1 and Comparative Example 2. The crack occurrence rate of the batteries of Example 1 and Example 2 was 0%. The batteries of Example 1 and Example 2 exhibited a discharge capacity of 0.70 mAh.

In the batteries of Example 1 and Example 2, the index A of the electrode was lower than the index A of the central region of the electrolyte layer. That is, in the batteries of Example 1 and Example 2, the mass ratio of the carbide derived from the binder in the electrode was lower than the mass ratio of the carbide derived from the binder in the central region of the electrolyte layer.

The flexural strength of the battery of Example 2, which used a low-molecular-weight acrylic resin, was higher than the flexural strength of the battery of Example 1, which used a high-molecular-weight acrylic resin.

The battery of Comparative Example 1 had no electronic conductivity in all the regions of the electrolyte layer. However, the flexural strength of the battery of Comparative Example 1 was low. The crack occurrence rate was also as high as 5%.

The flexural strength of the battery of Comparative Example 2 was higher than the flexural strength of the battery of Comparative Example 1. The crack occurrence rate was also reduced to 2%. However, the battery of Comparative Example 2 exhibited electronic conductivity in all the regions of the electrolyte layer. Consequently, the discharge capacity of the battery of Comparative Example 2 was as low as 0.50 mAh, raising suspicion of a short circuit between the positive electrode and the negative electrode.

In the batteries of Comparative Example 1 and Comparative Example 2, the index A of the electrode was equal to the index A of the central region of the electrolyte layer. That is, in the batteries of Comparative Example 1 and Comparative Example 2, the mass ratio of the carbide derived from the binder in the electrode was equal to the mass ratio of the carbide derived from the binder in the central region of the electrolyte layer.

INDUSTRIAL APPLICABILITY

The technique of the present disclosure is suitable for solid-state batteries.

**Claims**

1. A battery comprising:

   a first electrode;
   a second electrode; and
   an electrolyte layer disposed between the first electrode and the second electrode so as to be in contact with the first electrode and the second electrode, wherein
   the first electrode is a sintered body comprising a first active material and a first oxide solid electrolyte,
   the electrolyte layer is a sintered body comprising a second oxide solid electrolyte, and comprises: a first region comprising an interface between the first electrode and the electrolyte layer; and a central region comprising a center position in a thickness direction, the electrolyte layer having an insulating property in the first region, and
   the battery satisfies at least one selected from the following requirements (a) and (b):

   (a) a mass ratio of a carbide derived from a binder in the first electrode is lower than a mass ratio of a carbide derived from a binder in the central region of the electrolyte layer; and
   (b) when a ratio of the number of grain boundaries comprising a carbide to the number of grain boundaries appearing in a cross section of the battery parallel to the thickness direction is defined as an index A, the index A of the first electrode is lower than the index A of the central region of the electrolyte layer.

2. The battery according to claim 1, wherein
   the first oxide solid electrolyte and the second oxide solid electrolyte each comprise a lithium-containing phosphoric acid compound having a NASICON-type structure.

3. The battery according to claim 1, wherein

   the second electrode is a sintered body comprising a second active material and a third oxide solid electrolyte, and
   a mass ratio of a carbide derived from a binder in the second electrode is lower than the mass ratio of the carbide derived from the binder in the central region of the electrolyte layer.

4. The battery according to claim 3, wherein
   the electrolyte layer further comprises a second region comprising an interface between the second electrode and the electrolyte layer, the electrolyte layer having an insulating property in the second region.

5. The battery according to claim 3, wherein
   the third oxide solid electrolyte comprises a lithium-containing phosphoric acid compound having a NASICON-type structure.

6. The battery according to claim 1, wherein
a porosity of the electrolyte layer is lower than a porosity of the first electrode.

7. A method for producing a battery comprising a first electrode, an electrolyte layer, and a second electrode in this order, the method comprising

firing a stack comprising: a first electrode sheet comprising a first active material, a first solid electrolyte, and a first binder; and an electrolyte sheet comprising a second solid electrolyte and a second binder, wherein
a decomposition temperature of the second binder is higher than a decomposition temperature of the first binder.

8. The method according to claim 7, wherein
the firing the stack comprises, in the following order:

heating the stack at a predetermined debinding temperature; and
heating the stack at a higher temperature than the debinding temperature, and
the predetermined debinding temperature is a temperature between the decomposition temperature of the first binder and the decomposition temperature of the second binder.

9. The method according to claim 7, wherein
a difference between the decomposition temperature of the first binder and the decomposition temperature of the second binder is 100°C or more.

FIG.1

FIG.2

## INTERNATIONAL SEARCH REPORT

| International application No. |
|---|
| **PCT/JP2024/005807** |

### A. CLASSIFICATION OF SUBJECT MATTER

**H01M 10/0585**(2010.01)i; **H01M 4/13**(2010.01)i; **H01M 4/62**(2006.01)i; **H01M 10/052**(2010.01)i; **H01M 10/0562**(2010.01)i
FI: H01M10/0585; H01M4/13; H01M4/62 Z; H01M10/052; H01M10/0562

According to International Patent Classification (IPC) or to both national classification and IPC

### B. FIELDS SEARCHED

Minimum documentation searched (classification system followed by classification symbols)

H01M10/0585; H01M4/13; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/095757 A1 (TDK CORPORATION) 20 May 2021 (2021-05-20) paragraphs [0024], [0073]-[0075], [0083]-[0086], [0095]-[0098] | 1-5 |
| A | | 7-9 |
| A | JP 2018-206727 A (SOKEN INC.) 27 December 2018 (2018-12-27) | 1-9 |
| A | JP 7201085 B2 (MURATA MANUFACTURING CO., LTD.) 10 January 2023 (2023-01-10) | 1-9 |
| A | JP 2020-002009 A (JOHNSON IP HOLDING LLC) 09 January 2020 (2020-01-09) | 1-9 |
| A | WO 2019/181909 A1 (TDK CORPORATION) 26 September 2019 (2019-09-26) | 1-9 |
| A | JP 2019-140065 A (FDK CORP.) 22 August 2019 (2019-08-22) | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 May 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/005807**

| Patent document cited in search report | | | Publication date (day/month/year) | Patent family member(s) | | | Publication date (day/month/year) |
|---|---|---|---|---|---|---|---|
| WO | 2021/095757 | A1 | 20 May 2021 | US | 2022/0399568 | A1 | |
| | | | | paragraphs [0031], [0079]-[0082], [0090]-[0093], [0103]-[0106] | | | |
| | | | | DE | 112020005602 | T5 | |
| | | | | CN | 114651357 | A | |
| JP | 2018-206727 | A | 27 December 2018 | (Family: none) | | | |
| JP | 7201085 | B2 | 10 January 2023 | US | 2022/0069347 | A1 | |
| | | | | WO | 2020/250981 | A1 | |
| | | | | EP | 3985772 | A1 | |
| | | | | CN | 113994501 | A | |
| JP | 2020-002009 | A | 09 January 2020 | US | 2020/0036000 | A1 | |
| | | | | US | 2017/0179472 | A1 | |
| | | | | WO | 2017/112804 | A1 | |
| | | | | EP | 3394918 | A1 | |
| | | | | KR | 10-2018-0095681 | A | |
| | | | | CN | 108604665 | A | |
| | | | | CN | 114551990 | A | |
| | | | | JP | 2019-500739 | A | |
| | | | | JP | 2020-177917 | A | |
| WO | 2019/181909 | A1 | 26 September 2019 | US | 2020/0381774 | A1 | |
| | | | | DE | 112019001409 | T5 | |
| | | | | CN | 111868991 | A | |
| JP | 2019-140065 | A | 22 August 2019 | (Family: none) | | | |

Form PCT/ISA/210 (patent family annex) (July 2022)

**EP 4 683 029 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5803700 B